# EUROPÄISCHE PATENTANMELDUNG

(11) **EP 1 413 413 A1**
(43) Veröffentlichungstag der Anmeldung: **28.04.2004**
(21) Anmeldenummer: 03450230.2
(22) Anmeldetag: 15.10.2003
(51) Int. Cl.: B29B 9/06, B29C 47/86

(54) **Granulierlochplatte**

(30) Priorität: 22.10.2002 AT 16042002
(71) Anmelder: Hehenberger, Gerhard, 4622 Eggendorf 108 (AT); Remili, Johannes, 4073 Wilhering (AT)
(72) Erfinder: Hehenberger, Gerhard, 4622 Eggendorf 108 (AT); Remili, Johannes, 4073 Wilhering (AT)
(74) Vertreter: Sonn & Partner Patentanwälte

(57) **Zusammenfassung**

Anordnung mit einem Granulierkopf (4) eines Extruders zum Granulieren von Kunststoffen mit mehreren Durchtrittsöffnungen (9) zum Durchtritt von Kunststoffschmelze und einer an seiner Stirnfläche (14) angeordneten Granulierlochplatte (6) mit an den Durchtrittsöffnungen (9) anschließenden Löchern (7), wobei die Durchtrittsöffnungen (9) in je einem gesonderten sich im Querschnitt zum freien Ende hin verjüngenden, über eine vordere Stirnfläche (14) des Granulierkopfes (4) hinausragenden stutzenförmigen Vorsprung (15) münden, und sich die Löcher (7) im Querschnitt zu einer vorderen Lauffläche (5) hin verjüngen, wodurch von einer an die vordere Lauffläche (5) anschließenden Schneidkammer (11) keine Angriffsfläche an die stutzenförmigen Vorsprünge (15) gegeben ist, sowie Granulierkopf (4) und Granulierlochplatte (6) für die erfindungsgemäße Anordnung.

## Beschreibung

Die Erfindung betrifft eine Anordnung mit einem Granulierkopf eines Extruders zum Granulieren von Kunststoffen mit mehreren Durchtrittsöffnungen zum Durchtritt von Kunststoffschmelze und einer an seiner Stirnfläche angeordneten Granulierlochplatte mit an den Durchtrittsöffnungen anschließenden Löchern.

Ferner betrifft die Erfindung einen Granulierkopf eines Extruders zum Granulieren von Kunststoffen mit mehreren Durchtrittsöffnungen zum Durchtritt von Kunststoffschmelze und eine Granulierlochplatte mit Löchern.

Beim Granulieren von Kunststoffen tritt grundsätzlich die Problematik auf, dass im Granulierkopf und somit in den Durchtrittsöffnungen ein relativ hohes Temperaturniveau herrscht, um zuverlässig ein Erstarren der Kunststoffschmelze zu vermeiden, die Kunststoffschmelze jedoch unmittelbar nach Austritt aus den Durchtrittöffnungen stark abgekühlt werden muss, so dass sich ein starkes Temperaturgefälle zwischen dem Granulierkopf bzw. der Granulierlochplatte und der angrenzenden Schneidkammer ergibt. Insbesondere beim Anfahrprozess, bei dem - im Falle einer Unterwassergranulierung - ein durch die Schneidkammer geleiteter Wasserkreislauf zum Kühlen der Kunststoffschmelze bereits geschlossen sein muss, bevor Kunststoffschmelze aus der Granulierlochplatte austritt, um ein Verklumpen des Granulats zu verhindern, ergibt sich, dass das Kühlwasser vor dem Austritt der Kunststoffschmelze mit der Oberfläche der Granulierlochplatte in Kontakt kommt und somit eine schockartige Abkühlung der Granulierlochplatte erfolgt. Dies kann zur Folge haben, dass die Kunststoffschmelze in einigen Löchern der Granulierlochplatte bzw. Durchtrittsöffnungen des Granulierkopfes bereits erstarrt und somit einzelne Löcher bzw. Durchtrittsöffnungen verschließt. Dies führt wiederum zu einem ungleichmäßigen Austreiben der Kunststoffschmelze aus den nicht verschlossenen Durchtrittsöffnungen bzw. Löchern, was zu einem ungleichmäßigen Granulat führt. Der Anfahrprozess muss dann gestoppt und erneut gestartet werden. Des weiteren ergibt sich durch das Verlegen einiger Durchtrittsöffnungen bzw. Löcher aufgrund der notwendigen Überwindung der erstarrten Kunststoffschmelze in den erkalteten Durchtrittsöffnungen bzw. Löchern ein sehr hoher Druckaufbau vor der Granulierlochplatte, wobei für eine erhöhte Betriebssicherheit des Anfahrprozesses eine Schmelzpumpe erforderlich ist, die jedoch hohe Kosten verursacht.

Es sind bereits verschiedenste Anordnungen von Granulierlochplatten an der Stirnseite eines Granulierkopfes bekannt, bei welchen eine thermische Isolierung zwischen der Granulierlochplatte und dem Granulierkopf vorgesehen ist. Beispielsweise ist aus der EP 0739700 A1 eine zweiteilige Granulierlochplatte bekannt, bei welcher eine aus einem Hartmetall bestehende Verschleißschutzschicht zur Anlage der Schneidmesser vorgesehen und zwischen der Verschleißschutzschicht und dem Granulierkopf eine Isolierschicht aus einem keramischen Material angeordnet ist, um ein Erstarren der Kunststoffschmelze in den Durchtrittsöffnungen zu vermeiden. Ein derartiger Aufbau ist jedoch aufwendig und zudem besteht nach wie vor eine hohe Gefahr, dass Kunststoffschmelze in den Löchern der Verschleißschutzschicht erstarrt, da die Verschleißschutzschicht aus Hartmetall besteht und somit einen hohen Wärmeleitwert aufweist.

Andererseits ist in der nicht vorveröffentlichten älteren AT-Patentanmeldung Nr. A 1570/2001 eine spezielle keramische Granulierlochplatte beschrieben, welche zugleich als Verschleißschutz und Isolierschicht vorgesehen ist. Hierin wird auch bereits die Ausgestaltung von stutzenförmigen Vorsprüngen auf der Stirnfläche des Granulierkopfes beschrieben, in welche die Durchtrittsöffnungen der Kunststoffschmelze münden, wobei diese jedoch lediglich zur Verdrehsicherung der Granulierlochplatte am Granulierkopf vorgesehen sind. Bei einer derartigen Ausgestaltung kommt jedoch nach wie vor die Stirnfläche der stutzenförmigen Vorsprünge mit der kalten Umgebung im Schneidraum - d.h. im Falle einer Unterwassergranulierung mit Kühlwasser - in Kontakt, so dass auch hierdurch nicht zuverlässig das Erstarren der Kunststoffschmelze in den Durchtrittsöffnungen bzw. den Löchern der Granulierlochplatte verhindert werden kann.

Weiter ist aus der US 4 120 625 A ein Granulierkopf mit einer Granulierlochplatte bekannt, bei dem ein sich zu einem freien Ende hin konisch verjüngender, ringförmiger Steg mit mehreren Durchtrittsöffnungen vorgesehen ist, der eine relativ große ringförmige Stirnfläche aufweist, die mit einem rotierenden Schneidmesser bzw. der kalten Umgebung in einer an die Granulierlochplatte angrenzenden Schneidkammer in Berührung kommt, so dass auch hier die Gefahr eines Erstarrens der Kunststoffschmelze in dem Durchtrittskanal gegeben ist. Die Granulierlochplatte ist hierbei zu Bildung einer Aufnahmeöffnung für den Steg entweder zweiteilig ausgebildet, oder sie besteht aus mehreren Kreissegmenten.

Aufgabe der Erfindung ist es nun, eine einen Granulierkopf und eine Granulierlochplatte aufweisende Anordnung zu schaffen, mit der ein Erstarren der Kunstoffschmelze in den Durchtrittsöffnungen des Granulierkopfes bzw. in den Öffnungen in der Granulierlochplatte insbesondere auch beim Anfahrprozess einer Unterwassergranulierung zuverlässig verhindert werden kann. Ferner sollen für diese Anordnung ein entsprechender Granulierkopf sowie eine entsprechende Granulierlochplatte geschaffen werden.

Zur Lösung der gestellten Aufgabe sieht die Erfindung eine Anordnung der eingangs angeführten Art vor, bei der die Durchtrittsöffnungen in je einem gesonderten sich im Querschnitt zum freien Ende hin verjüngenden, über eine vordere Stirnfläche des Granulierkopfes hinausragenden stutzenförmigen Vorsprung münden, und sich die Löcher im Querschnitt zu einer vorderen Lauffläche hin verjüngen, wodurch von einer an die vordere Lauffläche anschließenden Schneidkammer keine Angriffsfläche an die stutzenförmigen Vorsprünge gegeben ist. Somit wird eine Anordnung mit einer an der Stirnfläche eines Granulierkopfs befestigten Granulierlochplatte geschaffen, bei welcher ein Kontakt der Mündungen der Durchtrittsöffnungen mit der kühlen Umgebung der Schneidkammer vermieden wird, so dass ein Erstarren der Kunststoffschmelze im Mündungsbereich der Durchtrittsöffnungen des Granulierkopfes, insbesondere auch beim Anfahrprozess einer Unterwassergranulierung, zuverlässig verhindert wird.

Ein Erstarren der Kunststoffschmelze in den Durchtrittslöchern des Granulierkopfes bzw. den Löchern der Granulierlochplatte kann insbesondere mit einer Anordnung der eingangs angeführten Art verhindert werden, bei der zur thermischen Isolierung zwischen dem Vorsprung bzw. den Vorsprüngen des Granulierkopfes und den Löchern der Granulierlochplatte ein Freiraum vorgesehen ist, der mit einem Isoliermedium gefüllt ist. Durch das Vorsehen eines Freiraums zwischen den Löchern der Granulierlochplatte und dem Vorsprung bzw. den Vorsprüngen des Granulierkopfes, der mit einem Isoliermedium gefüllt ist, wird der Wärmeübergang zwischen Granulierlochplatte und Granulierkopf, d.h. ein Durchleiten der Kälte zu den Durchtrittsöffnungen, unterbunden, und somit ein ungewolltes Erstarren der Kunststoffschmelze noch in den Durchtrittsöffnungen zuverlässig verhindert.

Für eine konstruktiv einfache Realisierung eines Freiraums zwischen dem bzw. den Vorsprüngen des Granulierkopfes und den Löchern der Granulierlochplatte, welcher einen sich von der Lauffläche erweiternden Querschnitt aufweist, ist es von Vorteil, wenn die Vorsprünge und die Löcher konisch ausgebildet sind, wobei der Öffnungswinkel der Löcher größer ist als der Öffnungswinkel der Vorsprünge.

Tests haben gezeigt, dass sich eine zweckmäßige Größe des Freiraums ergibt, wenn die Differenz der beiden Öffnungswinkel zwischen 5° und 20°, vorzugsweise ca. 11°, beträgt.

Wenn die Granulierlochplatte mit zumindest einer Befestigungsplatte am Granulierkopf befestigt ist, die einen in die Stufe der Granulierlochplatte eingreifenden stirnseitigen Flansch aufweist, wobei der Übergang von der Läuffläche der Granulierlochplatte zur Stirnseite der Befestigunsplatte im Wesentlichen plan ist, können Befestigungen, die über die vordere Lauffläche der Granulierlochplatte überstehen und somit stufenförmige Absätze, in welchen sich erstarrte Kunststoffschmelze insbesondere beim Anfahrprozess ansammeln könnte, vermieden werden.

Zur Lösung der gestellten Aufgabe sieht die Erfindung gemäß einem zweiten Aspekt auch einen Granulierkopf vor, der dadurch gekennzeichnet ist, dass die Durchtrittsöffnungen in je einem sich im Querschnitt zum freien Ende hin verjüngenden, über eine vordere Stirnfläche des Granulierkopfes hinausragenden stutzenförmigen Vorsprung münden. Mit Hilfe der sich zum freien Ende hin verjüngenden Vorsprünge ergibt sich, dass die vorderen Stirnflächen der Vorsprünge auf einfache Weise von der Granulierlochplatte abgedeckt werden können, so dass die Vorsprünge faktisch nicht mit der kühlen Umgebung in der Schneidkammer, insbesondere dem Kühlwasser im Falle einer Unterwassergranulierung, in Kontakt stehen, wodurch ein Abkühlen des Granulierkopfes im Bereich um die Durchtrittsöffnungen unterbunden wird, und somit ein Erstarren der Kunststoffschmelze in den Durchtrittsöffnungen zuverlässig verhindert wird. Zudem ergibt sich durch die stutzenförmige Ausbildung der Vorsprünge ein Verdrehschutz für eine auf der Stirnfläche des Granulierkopfes angeordnete Granulierlochplatte.

Wenn sich sich die stutzenförmigen Vorsprünge konisch verjüngen, ergibt sich eine Ausgestaltung der Vorsprünge, bei welcher insbesondere im vordersten Endbereich, welcher der Schneidkammer und somit der kalten Umgebung zugewandt ist, eine vergleichsweise geringe Angriffsfläche für die von Richtung der Schneidkammer durchgeleitete Kälte geboten wird.

Für eine konstruktiv einfache Ausgestaltung des Granulierkopfes ist es von Vorteil, wenn die Vorsprünge mit dem Granulierkopf einstückig ausgebildet sind.

Wenn als stutzenförmige Vorsprünge gesonderte Einsätze in den Durchtrittsöffnungen vorgesehen sind, können bei demselben Granulierkopf verschiedene Einsätze verwendet werden, so dass Einsätze aus verschiedenen Materialien bzw. mit unterschiedlich großen Durchtrittsöffnungen je nach Art des gewünschten Granulats eingesetzt werden können.

Gemäß einem dritten Aspekt sieht die Erfindung eine Granulierlochplatte vor, die dadurch gekennzeichnet ist, dass sich die in der kreisringförmigen Granulierlochplatte vorgesehenen Löcher im Querschnitt zu einer vorderen Lauffläche hin verjüngen. Durch diese Ausgestaltung wird eine Abdeckung von den die Durchtrittsöffnungen enthaltenden Vorsprüngen auf der Stirnseite des Granulierkopfes erzielt, und es kann somit ein Kontakt der an der vorderen Lauffläche vorliegenden, vergleichsweise kühlen Umgebungstemperatur mit den Durchtrittsöffnungen des Granulierkopfes zuverlässig verhindert werden.

Eine besonders gute Abschirmung von aus dem Granulierkopf hinausragenden Vorsprüngen kann erreicht werden, wenn sich der Querschnitt der Löcher zumindest teilweise stetig verjüngt.

Zur Aufnahme von stutzenförmigen, sich zum freien Ende hin konisch verjüngenden Vorsprüngen des Granulierkopfes ist es günstig, wenn die Löcher konisch ausgebildet sind, da somit zugleich eine Selbstzentrierung der Granulierlochplatte in ihrer an der Stirnfläche eines Granulierkopfes befestigten Stellung gegeben ist.

Wenn eine den Querschnitt der Granulierlochplatte in der Betriebsstellung zur Lauffläche hin verringernde umfangseitige Stufe vorgesehen ist, kann die Granulierlochplatte mittels einer in die umfangseitige Stufe eingreifenden Platte befestigt werden, so dass sich im Bereich der Durchtrittsöffnungen eine plane stufenfreie Oberfläche ergibt. Hierdurch kann - insbesondere während des Anfahrprozesses - verhindert werden, dass sich erstarrte Kunststoffschmelze an angrenzenden überstehenden Stufen ablagert, wodurch darauffolgend die Rotation der Schneidmesser behindert werden könnte.

Eine materialsparende, zweckmäßige Ausgestaltung der Granulierlochplatte ist gegeben, wenn die kreisringförmige Granulierlochplatte am Innen- und Außenumfang eine den Querschnitt der Granulierlochplatte in der Betriebsstellung zur Lauffläche hin verringernde Stufe aufweisen kann, so dass die kreisringförmige Granulierlochplatte mit einer in die innenseitige Stufe eingreifenden und einer in die außenseitige Stufe eingreifenden Befestigungsplatte mit dem Granulierkopf verbunden werden kann, wodurch wiederum an der Schneidfläche in Richtung der Schneidkammer vorspringende Stufen vermieden werden können, in welche sich gegebenenfalls ungewünschter Weise Kunststoffschmelzeablagerungen bilden könnten.

Die Erfindung wird nachstehend anhand von in der Zeichnung dargestellten bevorzugten Ausführungsbeispielen, auf die sie jedoch nicht beschränkt sein soll, noch weiter erläutert. Im Einzelnen zeigen in der Zeichnung:
Fig.1 einen Schnitt einer Granulier-Anordnung mit einem Granulierkopf, bei dem die Durchtrittsöffnungen in sich im Querschnitt zum freien Ende hin verjüngenden Vorsprüngen münden;
Fig. 2 eine Draufsicht auf den Granulierkopf gemäß Fig.1;
Fig. 3a eine Detailansicht eines sich zum freien Ende hin verjüngenden Vorsprungs gemäß Fig. 1, der einstückig mit dem Granulierkopf ausgebildet ist;
Fig. 3b eine Detailansicht ähnlich Fig. 3a, jedoch mit einem als gesonderter Einsatz ausgebildeten Vorsprung, in dem eine Durchtrittsöffnung mündet.

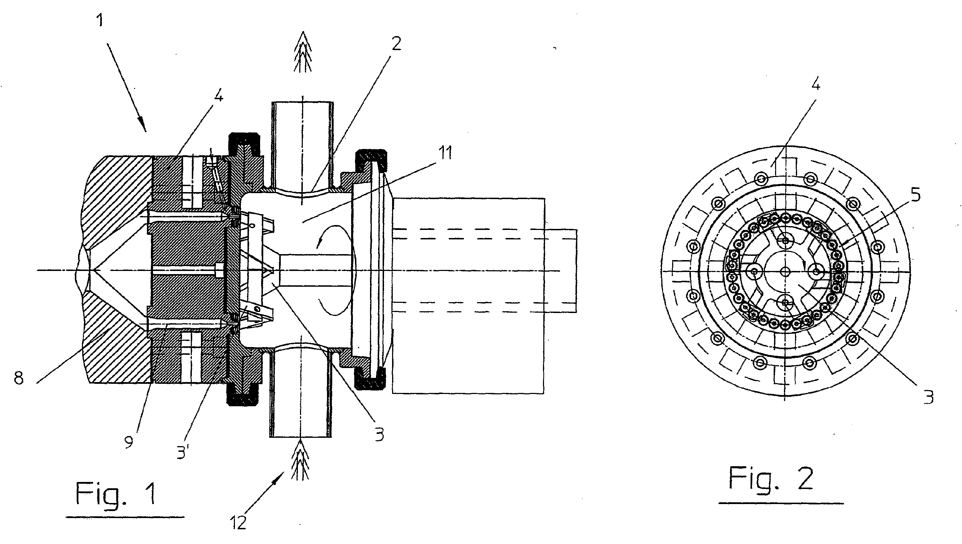

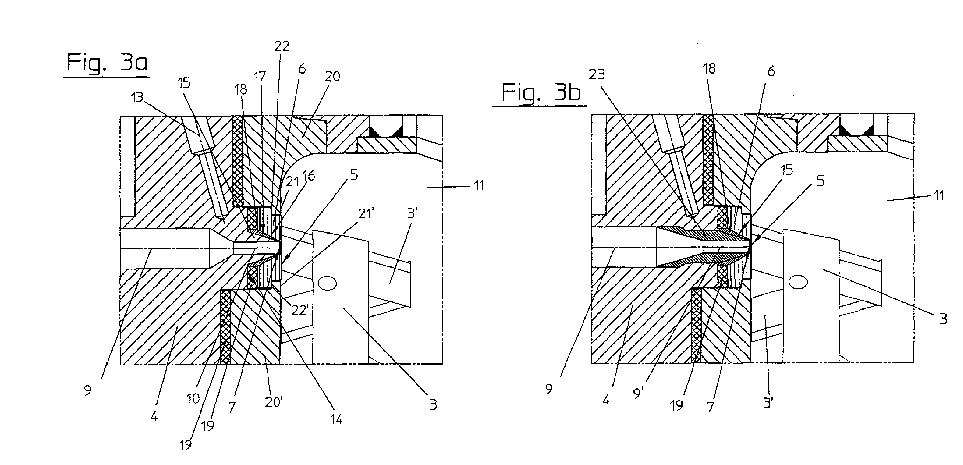

In Fig. 1 ist eine Granuliervorrichtung 1 mit einem Granuliergehäuse 2 ersichtlich, in dem ein Messerkopf 3 drehbar gelagert ist. An dem Messerkopf 3 sind Schneidmesser 3' befestigt, die an einer vorderen Lauffläche 5 (s. auch Fig. 3a und 3b) einer an einem Granulierkopf 4 befestigten Granulierlochplatte 6 zum Granulieren der aus Löchern 7 der Granulierlochplatte 6 austretenden Kunststoffschmelze anliegen.

Beim Anfahrprozess des Granuliervorgangs wird zunächst das Granuliergehäuse 2 geschlossen, der Messerkopf 3 mit einem definierten Druck an die Lauffläche 5 der Granulierlochplatte 6 angestellt und mit der gewünschten Drehzahl in Drehung versetzt. Durch ein Schmelzeanfahrventil 8 wird sodann Kunststoffschmelze zu Durchtrittsöffnungen 9 in den Granulierkopf 4 geleitet. Zugleich wird in eine von dem Granuliergehäuse 2 eingeschlossene Schneidkammer 11 Kühlwasser in Pfeilrichtung 12 geleitet.

Somit ergibt sich ein beträchtliches Temperaturgefälle zwischen der mit Kühlwasser gefüllten Schneidkammer 11 und dem mittels Heizpatronen 13 erwärmten Granulierkopf 4, in dem ein vorzeitiges Erstarren der durch die Durchtrittsöffnungen 9 eingeleiteten Kunststoffschmelze verhindert werden soll.

Wie insbesondere in Fig. 3a ersichtlich, sind an einer vorderen Stirnfläche 14 des Granulierkopfes 4 stutzenförmige Vorsprünge 15 vorgesehen, welche einen sich zu ihrem freien Ende hin konisch verjüngenden Querschnitt aufweisen, um eine möglichst geringe Angriffsfläche des in der Schneidkammer 11 vorliegenden Kühlwassers an den die Durchtrittsöffnungen 9 umgebenen Bereich zu ermöglichen. Somit ergibt sich eine faktisch nicht vorhandene Stirnfläche der stutzenförmigen Vorsprünge 15 und somit effektiv keine Angriffsfläche für das in der Schneidkammer 11 vorliegende Kühlwasser.

Dementsprechend weist die zur Anlage der Schneidmesser 3' vorgesehene Granulierlochplatte 6 sich von der vorderen Lauffläche 5 weg zur Stirnfläche 14 des Granulierkopfes konisch erweiterende Löcher 16 auf. Hiebei ist der Öffnungswinkel der sich konisch erweiternden Löcher 16 der Granulierlochplatte 6 um ca. 11° größer als der Öffnungswinkel der sich konisch verjüngenden stutzenförmigen Vorsprünge 15 des Granulierkopfes 4, so dass sich ein Freiraum 17 zwischen den Vorsprüngen 15 und den Löchern 16 ergibt. Dieser Freiraum 17 ist mit einem Isoliermedium 18 gefüllt, so dass ein Abkühlen der stutzenförmigen Vorsprünge 15 möglichst von der Granulierlochplatte 6 her zuverlässig unterbunden wird. Üblicherweise besteht die Granulierlochplatte 6 aus Hartmetall und weist somit einen guten Wärmeleitwert auf, sie kann jedoch beispielsweise auch aus einem keramischen Material bestehen, welches nach Möglichkeit eine schlechte Wärmeleitfähigkeit aufweist, so dass die Temperatur des Granulierkopfes 4 auch in den stutzenförmigen Vorsprüngen 15 konstant gehalten werden kann. Als Isoliermedium 18 kann jedes temperaturbeständige elastische Material, beispielsweise Silikon, verwendet werden. Zudem dient das Isoliermedium 18 als Ausgleichsmasse bei unterschiedlichen thermischen Dehnungen der Granulierlochplatte 6 und der Vorsprünge 15 des Granulierkopfes 4.

Zur weiteren thermischen Isolierung des Granulierkopfes 4 von der mit Kühlwasser gefüllten Schneidkammer 11 ist an der Stirnfläche 14 des Granulierkopfes 4 eine Isolierschicht 19 angebracht.

Wie insbesondere aus Fig. 2 ersichtlich ist, ist die Granulierlochplatte 6 kreisringförmig und die Durchtrittsöffnungen 9 sowie die Löcher 7 der Granulierlochplatte 6 gleichmäßig über den Umfang der Granulierlochplatte 6 verteilt. Die Isolierschicht 19 ist hiebei sowohl zwischen der Granulierlochplatte 6 und dem Granulierkopf 4 als auch zwischen die Granulierlochplatte 6 umgebenden Befestigungsplatten 20, 20' und dem Granulierkopf 4 vorgesehen.

Zur Befestigung der Granulierlochplatte 6 an der Stirnfläche des Granulierkopfes 4 weisen die äußere Befestigungsplatte 20 und die innere Befestigungsplatte 20' jeweils einen stirnseitigen Flansch 21, 21' auf, der in einer außenseitigen Stufe 22 bzw. einer umfangseitig innenliegenden Stufe 22' der Granulierlochplatte 6 eingreift, so dass der Übergang von der Lauffläche 5, der Granulierlochplatte 6 zu der der Schneidkammer 11 zugewandten Stirnseite der Befestigungsplatten 20, 20' im Wesentlichen plan ist. Hierdurch können Stufenbildungen vermieden werden, in welchen sich ungewünschter Weise erstarrte Kunststoffschmelze ablagern könnte.

Bei dem in Fig. 3a gezeigten Ausführungsbeispiel ist der stutzenförmige Vorsprung 15 einstückig mit dem Granulierkopf 4 ausgebildet, wodurch sich eine einfache Herstellung in einem Stück ergibt.

Wie in Fig. 3b ersichtlich, können andererseits auch eigene Einsätze 23 in die Durchtrittsöffnungen 9 des Granulierkopfes 4 eingesetzt werden, durch welche die stutzenförmigen, sich konisch verjüngenden Vorsprünge 15 gebildet werden. Hierdurch kann die Granuliervorrichtung 1 für verschiedene Kunststoffarten eingesetzt werden, da je nach Anforderung ein Einsatz 23 mit unterschiedlich großer Durchtrittsöffnung 9' eingesetzt werden kann. Zudem kann auch das Material des Einsatzes 23 gewählt werden. Somit ergibt sich eine vielseitig einsetzbare Granuliervorrichtung 1, welche mit dem gleichen Granulierkopf 4 bzw. der gleichen Granulierlochplatte 6 je nach Art der Einsätze 23 für verschiedenste Kunststoffarten eingesetzt werden kann.

## Patentansprüche

1. Anordnung mit einem Granulierkopf (4) eines Extruders zum Granulieren von Kunststoffen mit mehreren Durchtrittsöffnungen (9) zum Durchtritt von Kunststoffschmelze und einer an seiner Stirnfläche (14) angeordneten Granulierlochplatte (6) mit an den Durchtrittsöffnungen (9) anschließenden Löchern (7), **dadurch gekennzeichnet, dass** die Durchtrittsöffnungen (9) in je einem gesonderten sich im Querschnitt zum freien Ende hin verjüngenden, über eine vordere Stirnfläche (14) des Granulierkopfes (4) hinausragenden stutzenförmigen Vorsprung (15) münden, und sich die Löcher (7) im Querschnitt zu einer vorderen Lauffläche (5) hin verjüngen, wodurch von einer an die vordere Lauffläche (5) anschließenden Schneidkammer (11) keine Angriffsfläche an die stutzenförmigen Vorsprünge (15) gegeben ist.

2. Anordnung nach Anspruch 1, **dadurch gekennzeichnet, dass** zur thermischen Isolierung zwischen dem Vorsprung bzw. den Vorsprüngen (15) des Granulierkopfes (4) und den Löchern (7) der Granulierlochplatte (6) ein Freiraum (17) vorgesehen ist, der mit einem Isoliermedium (18) gefüllt ist.

3. Anordnung nach Anspruch 1 oder 2, **dadurch gekennzeichnet, dass** die Vorsprünge (15) und die Löcher (7) konisch ausgebildet sind, wobei der Öffnungswinkel der Löcher (7) größer ist als der Öffnungswinkel der Vorsprünge (15).

4. Anordnung nach Anspruch 3, **dadurch gekennzeichnet, dass** die Differenz der beiden Öffnungswinkel zwischen 5° und 20°, vorzugsweise ca. 11°, beträgt.

5. Anordnung nach einem der Ansprüche 1 bis 4, **dadurch gekennzeichnet, dass** die Granulierlochplatte (6) mit zumindest einer Befestigungsplatte (20, 20') am Granulierkopf (4) befestigt ist, die einen in die Stufe (22, 22') der Granulierlochplatte (6) eingreifenden stirnseitigen Flansch (21, 21') aufweist, wobei der Übergang von der Läuffläche (5) der Granulierlochplatte (6) und zu der Stirnseite der Befestigunsplatte (20, 20') im Wesentlichen plan ist.

6. Granulierkopf (4) eines Extruders zum Granulieren von Kunststoffen mit mehreren Durchtrittsöffnungen (9) zum Durchtritt von Kunststoffschmelze, **dadurch gekennzeichnet, dass** die Durchtrittsöffnungen (9) in je einem sich im Querschnitt zum freien Ende hin verjüngenden, über eine vordere Stirnfläche (14) des Granulierkopfes (4) hinausragenden stutzenförmigen Vorsprung (15) münden.

7. Granulierkopf nach Anspruch 6, **dadurch gekennzeichnet, dass** sich die stutzenförmigen Vorsprünge (15) konisch verjüngen.

8. Granulierkopf nach Anspruch 6 oder 7, **dadurch gekennzeichnet, dass** die Vorsprünge (15) mit dem Granulierkopf (4) einstückig ausgebildet sind.

9. Granulierkopf nach Anspruch 6 oder 7, **dadurch gekennzeichnet, dass** als stutzenförmige Vorsprünge (15) gesonderte Einsätze (23) in den Durchtrittsöffnungen (9) vorgesehen sind.

10. Granulierlochplatte mit Löchern (7), **dadurch gekennzeichnet, dass** sich die in der kreisringförmigen Granulierlochplatte vorgesehenen Löcher (7) im Querschnitt zu einer vorderen Lauffläche (5) hin verjüngen.

11. Granulierlochplatte nach Anspruch 10, **dadurch gekennzeichnet, dass** sich der Querschnitt der Löcher (7) zumindest teilweise stetig verjüngt.

12. Granulierlochplatte nach Anspruch 10 oder 11, **dadurch gekennzeichnet, dass** die Löcher (7) konisch ausgebildet sind.

13. Granulierlochplatte nach einem der Ansprüche 10 bis 12, **dadurch gekennzeichnet, dass** eine den Querschnitt der Granulierlochplatte (6) in der Betriebsstellung zur Lauffläche (5) hin verringernde umfangseitige Stufe (22) vorgesehen ist.

14. Granulierlochplatte nach einem der Ansprüche 10 bis 13, **dadurch gekennzeichnet, dass** die kreisringförmige Granulierlochplatte (6) am Innen- und Außenumfang eine den Querschnitt der Granulierlochplatte (6) in der Betriebsstellung zur Lauffläche (5) hin verringernde Stufe (22, 22') aufweist.
